**Europäisches Patentamt**

**European Patent Office**

**Office européen des brevets**

(11) Veröffentlichungsnummer: **0 474 171 A1**

## (12) EUROPÄISCHE PATENTANMELDUNG

(21) Anmeldenummer: **91114799.9**

(22) Anmeldetag: **03.09.91**

(51) Int. Cl.5: **F16F 9/04**, B60G 17/052, B60G 17/015

(30) Priorität: **07.09.90 DE 4028384**
          **24.07.91 DE 4124516**

(43) Veröffentlichungstag der Anmeldung:
   **11.03.92 Patentblatt 92/11**

(84) Benannte Vertragsstaaten:
   **DE ES FR GB IT NL SE**

(71) Anmelder: **Iveco Magirus Aktiengesellschaft**
   **Schillerstrasse 2 Postfach 27 40**
   **W-7900 Ulm/Donau(DE)**

(72) Erfinder: **Helwig, Dieter**
   **Schillerstrasse 4**
   **W-7938 Oberdischingen(DE)**
   Erfinder: **Mühe, Peter, Dr.**
   **Badbergstrasse 16**
   **W-7900 Ulm(DE)**
   Erfinder: **Royal, Franz**
   **Dornbäumlesweg 16**
   **W-7910 Neu-Ulm(DE)**

(74) Vertreter: **Socha, Peter**
   **Iveco Magirus AG Postfach 2740**
   **Schillerstrasse 2**
   **W-7900 Ulm(DE)**

(54) **Mehrstufige Luftfeder, insbesondere für eine luftgefederte Fahrzeugachse eines Nutzfahrzeuges.**

㉗ Mehrstufige Luftfeder, insbesondere für eine luftgefederte Fahrzeugachse eines Nutzfahrzeuges
Bei einer bekannten mehrstufigen Luftfeder erfolgt eine Betätigung eines Luftabsperrventils in Abhängigkeit des Federweges. Zumeist sind aufwendige Schaltgestänge von Nöten. Eine Niveauregulierung des Fahrzeugaufbaus ist nicht möglich.

Es wird bei einer mehrstufigen Luftfeder (1) ein zwischen den Druckräumen (2, 3) angeordnetes Luftabsperrventil (4) vorgeschlagen, welches bei einem vorgegebenen Druck in einem Druckraum (2) der Druckräume (2, 3) gegen die Kraft einer Ventilfeder (12) und/oder einen Steuerdruck einer Steuerleitung (16) schließt bzw. bei erhöhtem Steuerdruck öffnet.

Fig.1

EP 0 474 171 A1

Die Erfindung betrifft eine mehrstufige Luftfeder, insbesondere für eine luftgefederte Fahrzeugachse eines Nutzfahrzeuges, mit hintereinander angeordneten Druckräumen, zwischen denen ein Luftabsperrventil angeordnet ist.

Aus DE-OS 2 241 179 ist eine mehrstufige Luftfeder eines Straßenfahrzeuges der vorgenannten Art bekannt, bei der das innerhalb der Druckräume angeordnete Luftabsperrventil, welches an eine äußere Druck- oder Ausgleichsleitung angeschlossen ist, bei einer Einfederung geschlossen wird, um eine andere Federcharakteristik einzustellen. Der Schließvorgang des Luftabsperrventils ist also abhängig vom Federweg. Von Nachteil sind insbesondere zu harte Federungseigenschaften bei einem leeren Fahrzeug.

Aufgabe der Erfindung ist die Schaffung einer mehrstufigen Luftfeder der eingangs genannten Art, welche eine einfache und wirksame lastabhängige mehrstufige Federregelung insbesondere eines Fahrzeugs ermöglicht, wobei gegebenenfalls auch der Fahrzeugaufbau über ein übliches Niveauregelventil immer auf dem gewünschten Niveau gehalten werden kann.

Gelöst wird die der Erfindung zugrundeliegende Aufgabe durch die im kennzeichnenden Teil des Anspruchs 1 angegebenen Merkmale.

Vorteilhaft weitergebildet wird der Erfindungsgegenstand durch die Merkmale der Unteransprüche 2 bis 15.

Wesen der Erfindung ist, daß das Luftabsperrventil bei einem vorgegebenen Druck in einem der Druckräume gegen die Kraft einer Ventilfeder und/oder den Steuerdruck einer Steuerleitung schließt. Es ist also nicht wie beim vorgenannten Stand der Technik eine wegabhängige, sondern eine druckabhängige Betätigung des Luftabsperrventils vorgesehen. Dadurch ist es möglich, durch Anpassen der Federung an den jeweiligen Beladungszustand des Fahrzeugs die jeweils besten Federungseigenschaften zu realisieren. Gleichzeitig kann auch eine Niveauregulierung des Fahrzeugaufbaus eingerichtet werden. Druckabhängige Betätigung eines Luftabsperrventils bedeutet zudem einen geringeren Verschleiß, da die Schaltteile bei einem Schaltvorgang in der Regel berührungsfrei sind im Gegensatz zu einer federwegabhängigen, unter Umständen sehr abrupten bekannten Federregelung. Durch die Erfindung lassen sich also mit Hilfe einfacher Mittel verbesserte Fahreigenschaften eines individuellen Fahrzeugs einrichten, insbesondere auch im Hinblick auf den Beladungszustand des Fahrzeugs. Auch dient das System zur weiteren Stabilisierung des Fahrzeugs in Seitenrichtung. Bei einem einseitigen Einfedern (Kurvenfahrt) wird die Federung des eingefederten kurvenäußeren Rades härter und stabilisiert dadurch das Fahrzeug. Aufgrund der integrierten Anordnung des Luftabsperrventils in der Luftfeder selbst ergibt sich ein sehr kompakter Aufbau. Das Luftabsperrventil kommt ohne Betätigungsgestänge aus und ist vorzugsweise direkt an der Zwischenwand der beiden Druckräume der mehrstufigen Luftfeder befestigt.

Zweckmäßigerweise ist die Steuerleitung, welche auch eine mit der Atmosphäre verbundene Ausgleichsleitung sein kann, mit einem pneumatischen Drucksteuerventil versehen, wobei auch in der Steuerleitung bzw. in der Ausgleichsleitung ein Drosselventil vorgesehen sein kann. Die Steuerleitung ist an eine Druck- oder an eine Vakuumquelle angeschlossen, und es kann das pneumatische Drucksteuerventil stufenlos oder in Stufen geregelt werden, so daß in der Steuerleitung ein definierter regelbarer Druck (Vakuum) aufgebaut werden kann. Der Druck- bzw. Vakuumaufbau in der Steuerleitung geht mit einem Heben bzw. Senken des Ventiltellers des Luftabsperrventils bei festgelegten Drücken im oberen Druckraum der Luftfeder einher, wodurch die Durchgänge zwischen den Druckräumen geöffnet bzw. geschlossen werden. Das pneumatische Drucksteuerventil ist insbesondere elektromagnetisch betätigbar und kann in Abhängigkeit von definierbaren Fahrbedingungen automatisch/manuell betätigt bzw. gesteuert werden. Ist ein pneumatisches Drucksteuerventil in einer (mit der Atmosphäre verbundenen) Ausgleichsleitung vorgesehen, so ist eine Entlüftung bzw. Belüftung des Luftabsperrventils möglich.

Das Drosselventil in der Steuerleitung bzw. Ausgleichsleitung sorgt dafür, daß bei Fahrzeugschwingungen entsprechend einem dynamischen Fahrbetrieb eines Fahrzeugs das Luftabsperrventil nicht fortwährend in unerwünschter Weise geöffnet und geschlossen wird.

Zwar ist aus DE-B-22 55 348 eine mehrstufige Luftfeder für ein Nutzfahrzeug bekannt. Die Luftfeder besitzt jedoch neben den beiden pneumatischen Druckräumen einen unteren Hydraulikraum, und es ist das Luftabsperrventil zwischen den beiden pneumatischen Druckräumen vergleichsweise kompliziert mit zusätzlichen Drosselstellen aufgebaut. Das bekannte Luftabsperrventil ist nicht nur kompliziert, sondern es wird durch den Differenzdruck zwischen den beiden pneumatischen Druckräumen vergleichsweise träge geschaltet.

Eine mehrstufige Luftfeder der eingangs genannten Art ist grundsätzlich auch aus DE-A-37 23 033 bekannt. Das dortige Luftabsperrventil wird jedoch direkt von außen durch einen Elektromagneten betätigt, nicht durch den Druck in einem der beiden Druckräume, wie dies bei der Erfindung der Fall ist.

Das letztgenannte bekannte Luftabsperrventil weist darüber hinaus einen vergleichsweise komplizierten zweistufigen Ventilkörper auf, welcher ein zweistufiges Öffnen bzw. Schließen einer (inneren) Druckkammer ermöglicht.

Die Erfindung wird nachfolgend anhand eines Ausführungsbeispiels unter Bezugnahme auf beigefügte Zeichnung näher erläutert; es zeigen:

Fig. 1 eine mehrstufige Luftfeder in einem schematischen Vertikalschnitt, und

Fig. 2 die Luftfeder gemäß Fig. 1 in größerer Einzelheit.

Gemäß Zeichnung umfaßt eine mehrstufige Luftfeder (1) einen oberen Druckraum (2) und einen unteren Druckraum (3), wobei die beiden Druckräume (2, 3) grundsätzlich nach Art bekannter Luftbälge aufgebaut sind. Der untere Druckraum (3) reicht hierbei topfartig in den oberen Druckraum (2) in konzentrischer Anordnung hinein und besitzt oberseitig eine stabile Zwischenwand (9), an der an zentraler Stelle ein Luftabsperrventil (4) angeordnet ist.

Das Luftabsperrventil (4) umfaßt seinerseits einen in Höhenrichtung verschieblich angeordneten Ventilteller (13), welcher in den oberen Druckraum (2) hineinreicht. Der Ventilteller (13) ist an zentraler Stelle am oberen Ende einer Kolbenstange (14) befestigt, deren unterer Kolben (5) in einem Zylinder (6) verschieblich ist, welcher oberseitig an der Zwischenwand (9) abdichtend befestigt ist. Im unteren Raum (15) des Zylinders (6) unterhalb des Kolbens (5) befindet sich eine Druckfeder (12), welche den Ventilteller (13) nach oben hin gegen einen oberen Begrenzungsanschlag des Kolbens (5) in Öffnungsrichtung des Ventils vorspannt. Der Raum (15) ist über eine Ausgleichsleitung oder eine Steuerleitung (16) durch den unteren Druckraum (3) mit der Atmosphäre bzw. mit einer (nicht veranschaulichten) Druck- oder Vakuumquelle verbunden, wobei sich in der Ausgleichsleitung bzw. Steuerleitung (16) ein (nicht veranschaulichtes) pneumatisches Drucksteuerventil und ein (nicht veranschaulichtes) Drosselventil befinden. Durch das pneumatische Drucksteuerventil kann stufenlos oder in Stufen ein definierter regelbarer Druck bzw. ein definiertes regelbares Vakuum im Raum (15) aufgebaut werden, wodurch ein Öffnen und Schließen des Luftabsperrventils (4) ermöglicht ist, insbesondere bei vorgegebenem konstantem Druck im Druckraum (2). Dadurch kann das Luftabsperrventil (4) (auch ohne Vorhandensein der Ventilfeder bzw. Druckfeder (12)) insbesondere in Abhängigkeit von definierbaren Fahrbedingungen automatisch oder von Hand gesteuert werden. Das vorgenannte Drosselventil trägt dynamischen Fahrzuständen des Fahrzeugs Rechnung und verhindert ein unerwünschtes fortwährendes Ein- und Ausschalten des Luftabsperrventils bei einem schnellen Ein- und Ausfedern des Fahrzeugs während einer Fahrt.

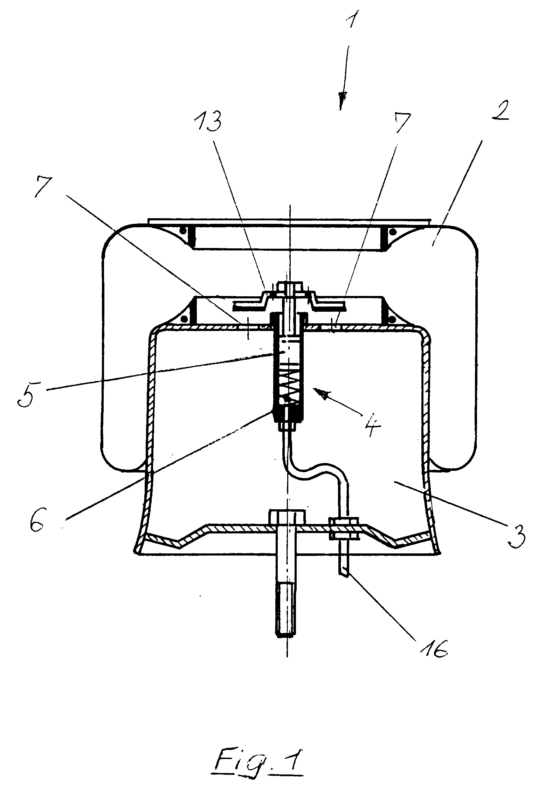

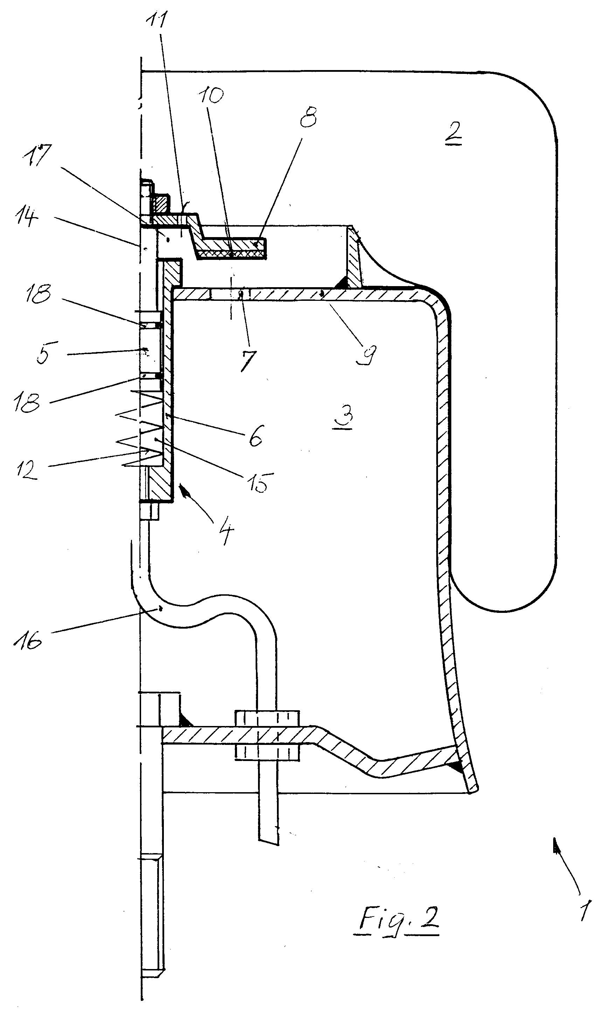

Der Ventilteller (13) weist umfangsmäßig gleichverteilte Ventilsitze (8) auf, welche mit einer unteren elastischen Abdichtauflage (10) versehen sind, wie dies insbesondere der Fig. 2 zu entnehmen ist. Die Ventilsitze (8) sind jeweiligen Durchgängen (7) zugeordnet, die in der Zwischenwand (9) als Durchgangsbohrungen ausgebildet sind, um bei geöffnetem Ventil der in Fig. 1 gezeigten Stellung einen gleichen Druck in den Druckräumen (2 und 3) einzurichten.

Wird bei einem Einfederungsvorgang, beispielsweise bei einer Kurvenfahrt oder bei einer bestimmten Last der Druck im System der mehrstufigen Luftfeder erhöht, bewegt sich der in Fig. 1 gezeigte geöffnete Ventilteller (13) nach unten in Richtung Schließstellung, und zwar aufgrund der Druckdifferenz zwischen den beiden Druckräumen (2, 3); während auf der Oberseite des Ventiltellers (13) der (erhöhte) Druck des Druckraums (2) insgesamt voll wirksam wird, wird die Unterseite des gleichen Ventiltellers (13) entsprechend dem Querschnitt der Kolbenstange (14) geringer beaufschlagt, so daß eine resultierende Schließkraft des Luftabsperrventils (4) in Richtung nach unten entsteht. Die nach oben gerichtete Gegenkraft im Bereich des Querschnitts der Kolbenstange (14) setzt sich lediglich aus der Summe des Atmosphärendrucks und des Federdrucks der Druckfeder (12) zusammen.

Bei einem Druckanstieg in den beiden Druckräumen (2, 3) wird also bei einem bestimmten Systemdruck der Ventilteller (13) im Bereich seiner Ventilsitze (8) bzw. deren Abdichtauflagen (10) in eine abdichtende Anlage zur Zwischenwand (9) gebracht, wobei die zugeordneten Durchgänge (7) geschlossen werden. Wird nun der Druck des Systems weiter erhöht, wird nur der Druck im oberen Druckraum (2) weiter erhöht, während im unteren Druckraum (3) der Ventilschließdruck gehalten wird. Der Ventilteller (13) befindet sich bei weiterer Druckerhöhung in dichter Anlage an der Oberseite der Zwischenwand (9). Der innere Raum (17) zwischen den Ventilsitzen (8) und der Kolbenstangenbefestigung des Ventiltellers ist über Ausgleichbohrungen (11) mit dem eigentlichen oberen Druckraum (2) kommunizierend verbunden. Der Kolben (5) weist, wie dies im einzelnen der Fig.2 zu entnehmen ist, Dichtringe (18) auf, welche den oberen Druckraum (2) gegenüber der Atmosphäre abdichten.

Durch die Erfindung wird also ein Federungssystem geschaffen, welches durch ein integriertes lastabhängiges Luftabsperrventil (4) ein (oder mehrere zusätzliche) Volumen (3) zu- bzw. abschaltet. Da das Luftabsperrventil (4) im zusätzlichen Volumen (3) integriert ist, kommt es ohne Betätigungsgestänge aus, welche bekannten wegabhängigen Federungssystemen eigen sind.

Bei geöffnetem Ventil (4) (leeres Fahrzeug) herrscht ein Druckausgleich zwischen dem Druckraum (2) und dem Druckraum (3) über die Ventilsitz-Durchgänge (7). Erfolgt ein Druckanstieg im System, beispielsweise durch Beladen des Fahrzeugs, wird der nach oben federvorgespannte Kolben (5) (berührungsfrei) nach unten gedrückt, bis der Ventilteller (13) beide Druckräume (2, 3) voneinander trennt. Durch die Trennung der beiden Druckräume (2, 3) steigt die adiabatische Federkennlinie an.

Nach dem vorgenannten Prinzip lassen sich ferner ein oder mehrere zusätzliche Volumen hintereinander oder alternativ parallel (gegebenenfalls jeweils mit unterschiedlichen Schließdrücken) schalten, so daß eine optimale Federung mit Hilfe einfacher Mittel eingestellt werden kann.

Gleichermaßen dient das druckabhängig betätigbare Luftabsperrventil (4) bei einer mehrstufigen Luftfeder (1) auch zur Seitenstabilisierung eines fahrenden Fahrzeugs in einer Kurve. Wird die mehrstufige Luftfeder (1) des kurvenäußeren Rades einem erhöhten Federdruck ausgesetzt, wird dort eine härtere Feder eingestellt als bei der mehrstufigen Luftfeder (1) des kurveninneren Rades des Fahrzeuges, und zwar ohne Verbindungsleitungen zwischen den Systemen, wie dies beispielsweise bei der Federung gemäß DE-OS 2 241 179 notwendig ist.

Alle in der Beschreibung erwähnten und/oder in der Zeichnung dargestellten neuen Merkmale allein oder in sinnvoller Kombination sind erfindungswesentlich, auch soweit sie in den Ansprüchen nicht ausdrücklich beansprucht sind.

**Patentansprüche**

1. Mehrstufige Luftfeder (1), insbesondere für eine luftgefederte Fahrzeugachse eines Nutzfahrzeuges, mit hintereinander angeordneten Druckräumen (2, 3), zwischen denen ein Luftabsperrventil (4) angeordnet ist, dadurch gekennzeichnet, daß das Luftabsperrventil (4) bei einem vorgegebenen Druck in einem Druckraum (2) der Druckräume (2, 3) gegen die Kraft einer Ventilfeder (12) und/oder gegen einen Steuerdruck einer Steuerleitung (16) schließt.

2. Luftfeder nach Anspruch 1, dadurch gekennzeichnet, daß das Luftabsperrventil (4) einen Ventilteller (13) aufweist, der durch eine Kolben-Zylinder-Anordnung (4, 5) verschieblich abgestützt und gegen zumindest einen Durchgang (7) zwischen den Druckräumen (2, 3) in einen Abdichtungseingriff bringbar ist.

3. Luftfeder nach Anspruch 2, dadurch gekennzeichnet, daß der Ventilteller (13) zentral an der Kolbenstange (14) des Kolbens (5) der Kolben-Zylinder-Anordnung befestigt ist und auf seinem Umfang Ventilsitze (8) aufweist, die mit zugeordneten Durchgängen (7) zwischen den Druckräumen (2, 3) in einen Abdichtungseingriff bringbar sind.

4. Luftfeder nach Anspruch 2 oder 3, dadurch gekennzeichnet, daß die Durchgänge (7) in der Wand (9) zwischen den Druckräumen (2, 3) ausgebildet sind.

5. Luftfeder nach Anspruch 3 oder 4, dadurch gekennzeichnet, daß die Ventilsitze (8) eine elastische Abdichtauflage (10) besitzen.

6. Luftfeder nach einem der Ansprüche 3 bis 5, dadurch gekennzeichnet, daß der Ventilteller (13) zwischen den Ventilsitzen (8) und der Kolbenstangenbefestigung zumindest eine Ausgleichsbohrung (11) besitzt.

7. Luftfeder nach einem der Ansprüche 2 bis 6, dadurch gekennzeichnet, daß der Kolben (5) in einem an der Zwischenwand (9) zwischen den beiden Druckräumen (2, 3) befestigten Zylinder (6) verschieblich aufgenommen und an der dem Ventilteller (13) abgewandten Seite durch eine Ventilfeder (12) in Form einer Druckfeder im Zylinder (6) vorgespannt ist.

8. Luftfeder nach Anspruch 7, dadurch gekennzeichnet, daß der der Druckfeder zugeordnete Raum (15) des Zylinders (6) an eine Ausgleichsleitung angeschlossen ist, die mit der Atmosphäre verbunden ist.

9. Luftfeder nach Anspruch 8, dadurch gekennzeichnet, daß der Raum (15) des Zylinders (6) an die Steuerleitung (16) angeschlossen ist, die ihrerseits mit einer Druck- oder Vakuumquelle in Verbindung steht.

10. Luftfeder nach Anspruch 9, dadurch gekennzeichnet, daß die Druck-/Vakuumquelle und/oder die Steuerleitung (16) ein pneumatisches Drucksteuerventil aufweist.

11. Luftfeder nach Anspruch 10, dadurch gekennzeichnet, daß das pneumatische Drucksteuerventil regelbar, insbesondere stufenlos regelbar ist.

12. Luftfeder nach Anspruch 8,
dadurch gekennzeichnet,
daß die Ausgleichsleitung ein pneumatisches Drucksteuerventil zur Be- oder Entlüftung des Raums (15) aufweist.

13. Luftfeder nach Anspruch 11 oder 12,
dadurch gekennzeichnet,
daß das pneumatische Drucksteuerventil in Abhängigkeit von definierbaren Fahrbedingungen, wie Kurvenfahrt, Fahrt des luftgefederten Rades über eine Grube oder dergl., betätigbar ist.

14. Luftfeder nach einem der Ansprüche 10 bis 13,
dadurch gekennzeichnet,
daß das pneumatische Drucksteuerventil elektromagnetisch betätigbar ist.

15. Luftfeder nach einem der Ansprüche 8 bis 14,
dadurch gekennzeichnet,
daß die Ausgleichsleitung bzw. Steuerleitung (16) ein Drosselventil aufweist.

Fig. 1

*Fig. 2*

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X,D<br>A,D | DE-C-2 255 348 (FRIESEKE & HOEPFNER)<br>* Spalte 3, Zeile 65 - Spalte 4, Zeile 18;<br>Abbildung *<br>--- | 1<br>2,4-7,<br>10,11 | F16F9/04<br>B60G17/052<br>B60G17/015 |
| X,D<br>A,D | DE-A-3 723 033 (VOLKSWAGEN)<br>* Spalte 2, Zeile 58 - Spalte 3, Zeile 39;<br>Abbildung *<br>--- | 1<br>2-5,10,<br>14 | |
| A | PATENT ABSTRACTS OF JAPAN<br>vol. 8, no. 224 (M-331)(1661) 13. Oktober 1984<br>& JP-A-59 106 308 ( ISUZU JIDOSHA ) 20. Juni<br>1984<br>* Zusammenfassung *<br>--- | 1,4,6,7,<br>10,13,14 | |
| A | DE-B-1 282 475 (BRIDGESTONE TIRE CO.)<br>* Spalte 8, Zeile 58 - Spalte 9, Zeile 43 *<br>* Spalte 5, Zeile 1 - Zeile 66; Abbildungen 3,15<br>*<br><br>--- | 1-3,7-10 | |
| A | DE-A-1 505 608 (FA. AUGUST BILSTEIN)<br>* Seite 9, Zeile 8 - Seite 10, Zeile 20;<br>Abbildungen 4,5 *<br>--- | 1,2,7-10 | RECHERCHIERTE SACHGEBIETE (Int. Cl.5 ) |
| A | GB-A-1 068 167 (TOYO GOMU KOGYO)<br>* Seite 1, Zeile 63 - Zeile 74; Abbildung *<br>--- | 1 | F16F<br>B60G |
| A | EP-A-0 166 702 (FIAT AUTO)<br>* Seite 4, Zeile 16 - Seite 6; Ansprüche 1,6;<br>Abbildungen 2,5 *<br>--- | 1,6-8 | |
| A | DE-A-2 200 356 (ROBERT BOSCH)<br><br>* Seite 2, Absatz 1; Abbildungen *<br>--- | 1,2,<br>7-11,14 | |
| A | FR-A-752 886 (MERCIER J.)<br>* Abbildungen 11,24 *<br>--- | | |
| A | GB-A-1 210 465 (LUSH G.W.M.)<br>* Abbildung * | | |

Der vorliegende Recherchenbericht wurde für alle Patentansprüche erstellt

| Recherchenort | Abschlußdatum der Recherche | Prüfer |
|---|---|---|
| DEN HAAG | 27 NOVEMBER 1991 | · TSITSILONIS  L. |